**Europäisches Patentamt**

**European Patent Office**

**Office européen des brevets**

(19)

(11) Veröffentlichungsnummer : **0 489 948 B1**

(12)

# EUROPÄISCHE PATENTSCHRIFT

(45) Veröffentlichungstag der Patentschrift :
08.03.95 Patentblatt 95/10

(51) Int. Cl.$^6$ : **H02M 5/45**, H02M 1/12

(21) Anmeldenummer : **90123736.2**

(22) Anmeldetag : **10.12.90**

(54) **Verfahren und Vorrichtung zur Eliminierung oder Reduzierung von Oberschwingungen und/oder Resonanzschwingungen.**

(43) Veröffentlichungstag der Anmeldung :
**17.06.92 Patentblatt 92/25**

(45) Bekanntmachung des Hinweises auf die
Patenterteilung :
**08.03.95 Patentblatt 95/10**

(84) Benannte Vertragsstaaten :
**DE ES FR GB IT**

(56) Entgegenhaltungen :
**EP-A- 0 161 738**
**EP-A- 0 296 840**

(73) Patentinhaber : **ASEA BROWN BOVERI AG**
**Haselstrasse 16**
**CH-5401 Baden (CH)**

(72) Erfinder : **Stemmler, Herbert, Dr.**
**Ahornweg 16**
**CH-5416 Kirchdorf (CH)**
Erfinder : **Steimer, Peter**
**Hofwis 6**
**CH-8165 Schleinikon (CH)**
Erfinder : **Oedegard, Björn**
**Neumättlistrasse 21**
**CH-5300 Turgi (CH)**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

TECHNISCHES GEBIET

Die Erfindung betrifft ein Verfahren zur Eliminierung oder Reduzierung mindestens einer Oberschwingung eines Stromrichters und/oder von Resonanzschwingungen sowie von Vorrichtungen zur Durchführung des Verfahrens.

STAND DER TECHNIK

Die Erfindung geht von einem Stand der Technik aus, wie er aus der EP-A2-0 296 840 bekannt ist. Dort sind ein Verfahren und eine Vorrichtung für den Antrieb eines Induktionsmotors angegeben, bei denen unerwünschte Oberschwingungen eines Schwingkreises aus Induktionsmotor und dazu parallelgeschalteter Kondensatorbank gedämpft werden. Beim Hochlauf des Motors stören insbesondere die 5., 7., 11. und 13. Harmonische. Der Motor wird vom Wechselrichter eines Umrichters mit Gleichstromzwischenkreis gespeist. Eine Dämpfung der Oberschwingungen erfolgt durch zusätzliche Taktungen in vorgebbaren Winkelabständen zur Grundtaktung der Thyristoren des Wechselrichters.

Nachteilig dabei ist, dass die Thyristoren mit erhöhter Taktfrequenz betrieben werden müssen.

DARSTELLUNG DER ERFINDUNG

Die Erfindung, wie sie in den Patentansprüchen 1, 7, 8 und 9 definiert ist, löst die Aufgabe, ein Verfahren und Vorrichtungen der eingangs genannten Art derart weiterzuentwickeln, dass die steuerbaren Ventile bei einer Dämpfung von Oberschwingungen mit einer vergleichsweise niedrigen Taktfrequenz betrieben werden können.

Ein Vorteil der Erfindung besteht darin, dass langsame, hochsperrende Thyristoren als Ventile verwendet werden können. Diese halten eine Sperrspannung von ca. 6,5 kV aus und benötigen eine Freiwerdezeit von ca. 400 µs - 500 µs. Schnelle Thyristoren benötigen eine Freiwerdezeit von ca. 100 µs, halten aber nur eine Sperrspannung von ca. 3 kV aus. Im Vergleich zu einer Bestückung des Wechselrichters mit GTO-Thyristoren kann ein ca. 1 % besserer Wirkungsgrad des Stromrichters erreicht werden. Dies ist insbesondere für eine Speisung von Maschinen mit einer Leistung von $\geqq$ 1 MW von erheblicher wirtschaftlicher Bedeutung.

KURZE BESCHREIBUNG DER ZEICHNUNGEN

Die Erfindung wird nachstehend anhand von Ausführungsbeispielen erläutert. Es zeigen:

| | |
|---|---|
| Fig. 1 | ein Blockschaltbild eines Umrichters mit einem Gleichstromzwischenkreis und einem Löschkreis für einen Wechselrichter des Umrichters zur Speisung einer 3phasigen Wechselstrommaschine, |
| Fig. 2 | ein Blockschaltbild einer 1. Regelschaltung für den Umrichter gemäss Fig. 1, |
| Fig. 3 | ein Prinzipschaltbild einer 3. Regelschaltung für den Wechselrichter des Umrichters, |
| Fig. 4 | ein Blockschaltbild einer 2. Regelschaltung für den Umrichter gemäss Fig. 1, |
| Fig. 5 | ein simuliertes Signaldiagramm des Zündwinkels für den Wechselrichter des Umrichters gemäss Fig. 1 bei Resonanzdämpfung, |
| Fig. 6, 8, 10, 12 | simulierte Signaldiagramme des Drehmoments der Wechselstrommaschine gemäss Fig. 1, des Wechselrichterstromes, des Laststromes und der Lastspannung, jeweils für die Phase R, ohne Resonanzdämpfung, |
| Fig. 7, 9, 11, 13 | simulierte Signaldiagramme für die gleichen Grössen wie in den benachbarten Fig. 6, 8, 10 und 12, jedoch mit Resonanzdämpfung der 5. Oberschwingung, |
| Fig. 14 | ein Signaldiagramm der Anregung eines resonanten Systems durch einen Rechteckimpuls, |
| Fig. 15 | ein Signaldiagramm der Anregung des gleichen resonanten Systems wie bei Fig. 14, jedoch mit einer Stromlücke im Stromrichterstrom, |
| Fig. 16a) - c) | Signaldarstellungen der Wechselrichterströme für 3 Wechselstromphasen mit Stromlücken in der Impulsblockmitte zur Dämpfung der 7. Oberschwingung, |
| Fig. 17a) | eine zeitliche Folge von Löschimpulsen des Löschkreises gemäss Fig. 1 zur Erzeugung von Stromlücken zur Dämpfung der 11. und 13. Oberschwingung, |
| Fig. 17b) - d) | Signaldarstellungen der Wechselströme für 3 Wechselstromphasen mit Stromlücken an den Impulsblockenden zur Dämpfung der 11. und 13. Oberschwingung und |

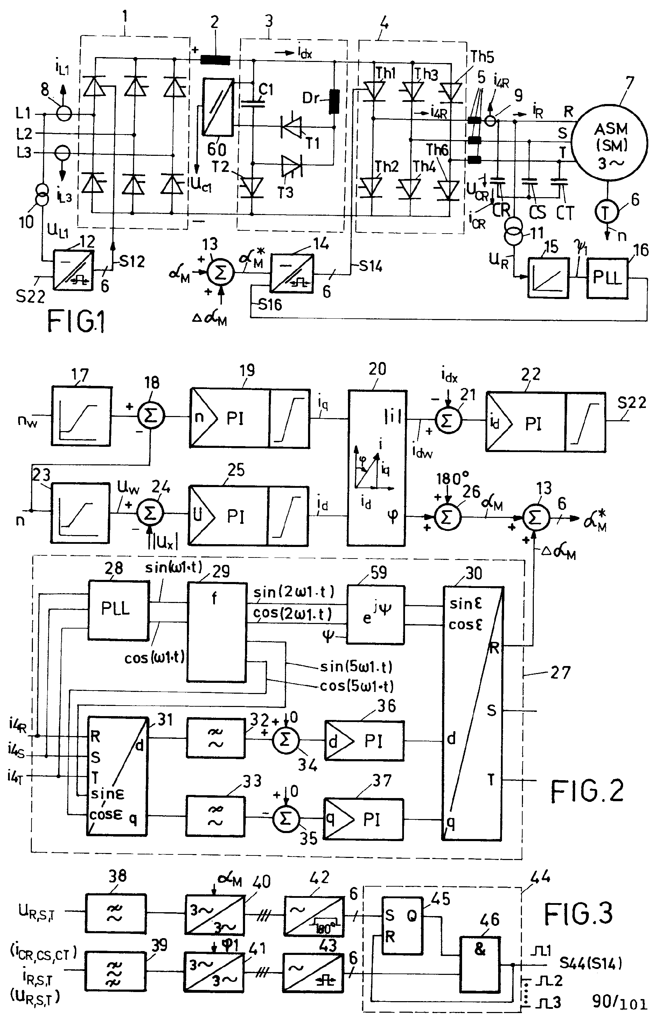

Fig. 18          eine Signaldarstellung des Zeitverlaufs der Zündwinkeldifferenz bei einer Regelschaltung gemäss Fig. 2.

## WEGE ZUR AUSFÜHRUNG DER ERFINDUNG

Der Einfachheit halber sind nachfolgend physikalische Grössen und dazu proportionale Signale gleich bezeichnet.

In Fig. 1 ist mit (1) ein 3phasiger Brückengleichrichter bezeichnet, der wechselstromseitig an Phasenleiter (L1 - L3) angeschlossen ist und der gleichstromseitig (+, -) über eine Zwischenkreisdrossel (2) mit einem Wechselrichter (4) in 3phasiger Brückenschaltung verbunden ist. Gleichrichter (1), Zwischenkreisdrossel (2), Löschkreis (3) und Wechselrichter (4) bilden zusammen einen Umrichter mit Gleichstromzwischenkreis, der an seinem Wechselstromausgang über 3 Last- bzw. Kommutierungsdrosseln (5) und 3 Lastkondensatoren (CR, CS, CT) in Sternschaltung oder auch Dreieckschaltung (nicht dargestellt) zur Kompensation von Oberschwingungen mit einem Motor bzw. einer Wechselstrommaschine bzw. einer 3phasigen Ansynchronmaschine oder Synchronmaschine (7) verbunden ist.

Stromwandler (8) im Strompfad der Phasenleiter (L1) und (L3) dienen zur Erfassung von Gleichrichterströmen ($i_{L1}$) und ($i_{L3}$), von denen auf die Grösse eines Zwischenkreisstromes ($i_{dx}$) geschlossen wird. Der Zwischenkreisstrom ($i_{dx}$) könnte auch mit einem aufwendigeren Gleichstromdetektor erfasst werden. Ein Spannungswandler (10) dient zur Erfassung einer Eingangswechselspannung ($U_{L1}$) am Phasenleiter (L1). In gleicher Weise werden die Wechselspannungen der beiden anderen Phasenleiter (L2) und (L3) erfasst (nicht dargestellt). Ausgangsseitig ist der Spannungswandler (10) mit einem Gleichrichter-Zündimpulswandler (12) verbunden, der ausgangsseitig 6 Zündimpulse (S12) an die Thyristoren des Gleichrichters (1) liefert. Der Gleichrichter (1) kann auch 12pulsig aufgebaut sein.

Der Löschkreis (3), der dem Wechselrichter (4) gleichstromseitig parallelgeschaltet ist, weist eine 1. Reihenschaltung aus einem Löschkreiskondensator (C1) und einem Thyristor (T2) auf, der kathodenseitig an die negative Anspeiseklemme (-) angeschlossen ist. In einem Parallelzweig zu dem Löschkreiskondensator (C1) ist eine Reihenschaltung aus einem induktiven Widerstand bzw. einer Umschwingdrossel (Dr) und einem steuerbaren elektrischen Ventil bzw. Thyristor (T1), der kathodenseitig mit der Anode des Thyristors (T2) verbunden ist, vorgesehen. Antiparallel zu dem Thyristor (T1) ist ein Thyristor (T3) geschaltet. Anstelle des Thyristors (T2) kann, insbesondere bei einer niedrigen Zwischenkreisspannung, eine Diode vorgesehen sein (nicht dargestellt). Mit (60) ist ein Gleichspannungsdetektor bezeichnet, der eine Gleichspannung ($U_{C1}$) am Löschkreiskondensator (C1) erfasst, die einer nicht dargestellten Steuereinrichtung zur Steuerung des Löschkreises (3) zugeführt ist.

Der vorliegende Umrichter ist z. B. für eine Zwischenkreisspannung von 2,4 kV und einen Zwischenkreisstrom ($i_{dx}$) von 840 A ausgelegt. Die Kapazität des Löschkreiskondensators (C1) beträgt 133 µF, die Induktivität der Umschwingdrossel (Dr) 0,1 mH.

Im Vergleich zu einer herkömmlichen Summenlöscheinrichtung, wie sie z. B. aus der EP-B1-0 161 738 bekannt ist, hat die hier angegebene Summenlöscheinrichtung (3) den Vorteil, dass die Ausschaltdauer der Thyristoren (Th1 - Th6) variabel eingestellt werden kann. Die Umschwingdrossel (Dr) kann vergleichsweise klein dimensioniert werden, so dass der Summenlöschkreis wenig Platz erfordert.

Anstatt den Thyristor (T3) antiparallel zum Thyristor (T1) zu schalten, kann er auch zusammen mit dem Thyristor (T2) in einem Parallelzweig zum Thyristor (T1) geschaltet sein, wobei die Kathode des Thyristors (T2) mit der Anode des Thyristors (T3) verbunden ist (nicht dargestellt).

Der Wechselrichter (4) weist 6 Thyristoren (Th1 - Th6) auf, die Zündimpulse (S14) von einem Wechselrichter-Zündimpulswandler (14) erhalten, wobei der Übersichtlichkeit wegen nur eine Verbindung zum Thyristor (Th1) dargestellt ist.

Ein Summierer (13) summiert ein eingangsseitig eingehendes Zündwinkel-Grundwertsignal ($\alpha_M$) und ein Zündwinkeldifferenzsignal ($\Delta\alpha_M$) zu einem ausgangsseitigen Zündwinkelsignal ($\alpha_M^*$), das dem Wechselrichter-Zündimpulswandler (14) zugeführt ist.

Der Wechselrichter (4) liefert ausgangsseitig einen Wechselrichterstrom ($i_{4R}$), der sich in einen Kondensatorstrom ($i_{CR}$) durch den Kondensator (CR) und einen Laststrom ($i_R$) durch die Last (7) bezüglich der Wechselstromphase (R) aufteilt. Gleiches gilt für die beiden anderen Phasen (S, T). Der Wechselrichterstrom ($i_{4R}$) wird mittels eines Stromwandlers (9) detektiert, eine Lastspannung ($U_R$) mittels eines Spannungswandlers (11). Ein der Lastspannung ($U_R$) proportionales Signal wird über einen Integrator (15) einer Rückkopplungsschleife mit Phasenverkettung bzw. einem Phasenregelkreis (16) zugeführt, dessen Ausgangssignal (S16) dem Wechselrichter-Zündimpulswandler (14) zugeführt ist. Das Ausgangssignal des Integrators (15) entspricht einer Statorflussverkettung ($\psi_1$). Entsprechendes gilt bezüglich der Wechselstromphasen (S, T).

Mit (6) ist ein an die Wechselstrommaschine (7) gekoppelter Tachometergenerator bezeichnet, der ausgangsseitig ein Drehzahlsignal (n) liefert.

Fig. 2 zeigt eine Schaltung für ein 1. Zündwinkel-Regelverfahren. Dabei wird das Drehzahlsignal (n) einem Rampengenerator (23) und einem negierenden Eingang eines Summierers (18) zugeführt. Der Rampengenerator (23) liefert ausgangsseitig ein Spannungssollwertsignal ($U_w$) an einen nichtnegierenden Eingang eines Summierers (24), an dessen negierenden Eingang ein Betragssignal ($|U_x|$) des Maximalwertes der 3 Lastspannungen ($U_R$, $U_S$, $U_T$) geführt ist. Ausgangsseitig ist der Summierer (24) mit einem Proportional-Integralbzw. PI-Regler mit 2seitigem Begrenzer (25) zugeführt, der ausgangsseitig ein Stromkomponentensignal ($i_d$) an einen Koordinatenwandler (20) liefert. Über einen weiteren Rampengenerator (17), dem eingangsseitig ein vorgebbares Drehzahl-Sollwertsignal ($n_w$) zugeführt ist, ferner über den Summierer (18) und einen diesem nachgeschalteten PI-Regler mit 2seitigem Begrenzer (19) ist dem Koordinatenwandler (20) ein weiteres Stromkomponentensignal ($i_q$) zugeführt, das im Koordinatenwandler (20) als ein zum Stromkomponentensignal ($i_d$) orthogonales Stromkomponentensignal interpretiert wird. Ausgangsseitig ist der Rampengenerator (17) mit einem nichtnegierenden Eingang des Summierers (18) verbunden.

An einem Betragsausgang ($|i|$) des Koordinatenwandlers (20) ist ein Zwischenkreisstrom-Sollwertsignal ($i_{dw}$) abgreifbar, das einem nichtnegierenden Eingang eines Summierers (21) zugeführt ist. Einem negierenden Eingang dieses Summierers (21) ist ein dem Zwischenkreisstrom ($i_{dx}$) proportionales Signal zugeführt. Ausgangsseitig ist der Summierer (21) mit einem PI-Regler mit 2seitigem Begrenzer (22) verbunden, dessen Ausgangssignal (S22) dem Gleichrichter-Zündimpulswandler (12) zugeführt ist.

Ein Winkelausgang ($\phi$) des Koordinatenwandlers (20) ist mit einem nichtnegierenden Eingang eines Summierers (26) verbunden, an dem ausgangsseitig das Zündwinkel-Grundwertsignal ($\alpha_M$) abgreifbar ist. Einen weiteren nichtnegierenden Eingang des Summierers (26) ist ein 180°-Signal zugeführt.

Das Zündwinkeldifferenzsignal ($\Delta\alpha_M$) wird in einem Resonanzdämpfungsglied (27) für die 5. Oberschwingung erzeugt. Dieses Resonanzdämpfungsglied (27) regelt die 5. Oberschwingung des Stromrichterstromes auf 0. Es weist einen 3Phasen/2Phasen-Koordinatenwandler (31) auf, dessen 3Phasen-Eingängen zu den Wechselrichterströmen ($i_{4R}$, $i_{4S}$, $i_{4T}$) proportionale Stromsignale zugeführt sind. Ein 2Phasen-Ausgang (d) des 3Phasen/2Phasen-Koordinatenwandlers (31) ist über ein Tiefpassfilter (32) 2. Ordnung, einen Summierer (34) und einen PI-Regler (36) mit einem 2Phasen-Eingang (d) eines 2Phasen/3Phasen-Koordinatenwandlers (30) verbunden. Ausgangsseitig ist das Tiefpassfilter (32) mit einem nichtnegierenden Eingang des Summierers (34) verbunden. Einem weiteren nichtnegierenden Eingang des Summierers (34) ist ein 0-Signal als Sollwert zugeführt. Der andere 2Phasenausgang des 3Phasen/2Phasen-Koordinatenwandlers (31) ist ebenfalls über ein Tiefpassfilter (33) 2. Ordnung, einen Summierer (35) und einen diesem nachgeschalteten PI-Regler (37) mit dem 2. 2Phasen-Eingang (q) des 2Phasen/3Phasen-Koordinatenwandlers (30) verbunden. Ausgangsseitig ist das Tiefpassfilter (33) mit einem negierenden Eingang des Summierers (35) verbunden. Einem nichtnegierenden Eingang dieses Summierers (35) ist ein 0-Signal als Sollwert zugeführt.

Ein Phasenregelkreis (28), dem eingangsseitig die Wechselrichterstromsignale ($i_{4R}$, $i_{4S}$, $i_{4T}$) zugeführt sind, liefert ausgangsseitig ein Sinussignal $\sin(\omega 1 \cdot t)$ und ein Cosinussignal $\cos(\omega 1 \cdot t)$ einem Funktionsgenerator (29) für goniometrische Funktionen. Dieser liefert ausgangsseitig ein Sinussignal $\sin(2 \cdot \omega 1 \cdot t)$ und ein Cosinussignal $\cos(2 \cdot \omega 1 \cdot t)$ einem Drehglied bzw. Winkeldreher (59), dem zusätzlich ein Phasensignal, entsprechend einem Drehwinkel ($\psi$) von vorzugsweise -90°, zugeführt ist. Dabei bezeichnen ($\omega 1$) die Kreisfrequenz des Stators der Wechselstrommaschine (7) und (t) die Zeit. Ausgangsseitig ist der Winkeldreher (59) mit Eingängen für $\sin\varepsilon$ und $\cos\varepsilon$ des 2Phasen/3Phasen-Koordinatenwandlers (30) verbunden, wobei ($\varepsilon$) den Winkel zwischen den Koordinatensystemen kennzeichnet. An weiteren Ausgängen des Funktionsgenerators (29) sind Signale für die Funktionen $-\sin(5 \cdot \omega 1 \cdot t)$ und $\cos(5 \cdot \omega 1 \cdot t)$ abgreifbar, die Eingängen für $\sin\varepsilon$ und $\cos\varepsilon$ des 3Phasen/2Phasen-Koordinatenwandlers (31) zugeführt sind.

Es versteht sich, dass mittels des Funktionsgenerators (29) auch andere goniometrische Funktionen als die angegebenen erzeugt werden können. Diese werden dann entsprechend zur Modifikation des Zündwinkel-Grundwertsignals ($\alpha_M$) verwendet.

Der 3Phasen/2Phasen-Koordinatenwandler (31) transformiert die R-, S-, T-Werte in ein rechtwinkliges $\alpha$-, $\beta$-Koordinatensystem und dieses in ein um den Winkel ($\varepsilon$) gedrehtes rechtwinkliges d-, q-Koordinatensystem gemäss den Transformationsgleichungen:

$$\alpha = 2 \cdot R/3 - S/3 - T/3,$$
$$\beta = (1/\sqrt{3}) \cdot (S - T),$$
$$d = \alpha \cdot \cos\varepsilon + \beta \cdot \sin\varepsilon,$$
$$q = -\alpha \cdot \sin\varepsilon + \beta \cdot \cos\varepsilon.$$

Der 2Phasen/3Phasen-Koordinatenwandler (30) transformiert rechtwinklige d-, q-Koordinaten durch eine Drehung um den Winkel ($\varepsilon$) in rechtwinklige $\alpha$-, $\beta$-Koordinaten und diese in 3phasige R-, S-, T-Koordinaten gemäss den Transformationsgleichungen:

$$\alpha = d \cdot \cos\varepsilon - q \cdot \sin\varepsilon,$$

$$\beta = d \cdot \sin \varepsilon + q \cdot \cos \varepsilon,$$
$$R = \alpha,$$
$$S = -0,5 \cdot \alpha + 0,5 \cdot \sqrt{3} \cdot \beta,$$
$$T = -0,5 \cdot \alpha - 0,5 \cdot \sqrt{3} \cdot \beta.$$

Dieses in Fig. 2 dargestellte Resonanzdämpfungsverfahren ist speziell auch für andere, aufwendigere Antriebsregelungen , z. B. Vektorregelung, möglich, welche über einen Zündwinkel ($\alpha_M$) auf den Wechselrichter (4) einwirken. Die Referenz für diesen Zündwinkel ($\alpha_M$) kann, wie in Fig. 1 dargestellt, die Maschinenspannung ($U_{R,S,T}$) sein. Prinzipiell ist es aber auch denkbar, dass andere Referenzen, wie z. B. die Rotorflussverkettung oder die entsprechende EMK als Referenz für den Zündwinkel ($\alpha_M$) benutzt werden.

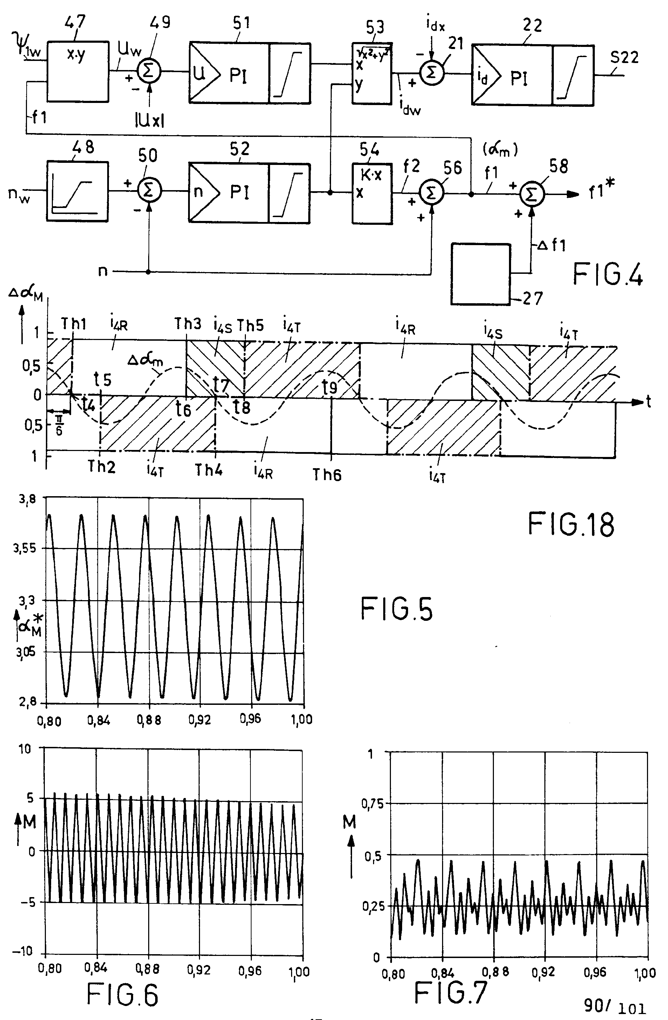

Fig. 4 zeigt eine Schaltung für ein 2. Zündwinkel-Regelverfahren. Dort wird ein vorgebbares Drehzahl-Sollwertsignal ($n_w$) über einen Rampengenerator (48) einem nichtnegierenden Eingang eines Summierers (50) zugeführt. Einem negierenden Eingang dieses Summierers (50) ist das Drehzahlsignal (n) zugeführt. Ausgangsseitig ist der Summierer (50) über einen PI-Regler mit 2seitigem Begrenzer (52) und einen Multiplizierer (54) mit einem nichtnegierenden Eingang eines Summierers (56) verbunden. Einem weiteren nichtnegierenden Eingang des Summierers (56) ist das Drehzahlsignal (n) zugeführt. Der Multiplizierer (54) multipliziert den Wert des Ausgangssignals des PI-Reglers mit 2seitigem Begrenzer (52) mit einem vorgebbaren Faktor (K), der einen Geräteparameter für die Beziehung: Drehmoment - Schlupffrequenz darstellt. Das Ausgangssignal des Multiplizierers (54) entspricht der Rotorfrequenz (f2) der Wechselstrommaschine (7), das Ausgangssignal des Summierers (56) der Statorfrequenz (f1). Dieses Ausgangssignal ist einem nichtnegierenden Eingang eines Summierers (58) und einem Multiplizierer (47) zugeführt. Einem weiteren nichtnegierenden Eingang des Summierers (58), der dem Summierer (13) gemäss Fig. 2 entspricht, ist das Ausgangssignal des Resonanzdämpfungsgliedes (27) gemäss Fig. 2 zugeführt, wobei dieses nun einem Frequenzdifferenzsignal ($\Delta$f1) und nicht mehr einem Zündwinkeldifferenzsignal ($\Delta\alpha_M$) entspricht.

Dem Multiplizierer (47) ist als weiteres Faktorsignal ein statorflussverkettungs-Sollwertsignal ($\psi_{1w}$) zugeführt. Ein ausgangsseitig am Multiplizierer (47) anliegendes Spannungssollwertsignal ($U_w$) ist einem nichtnegierenden Eingang eines Summierers (49) zugeführt. Einem negierenden Eingang des Summierers (49) ist das Betragssignal der Lastspannung ($U_x$) zugeführt. Ausgangsseitig ist der Summierer (49) über einen PI-Regler mit 2seitigem Begrenzer (51) und einen Betragsrechner (53) mit einem nichtnegierenden Eingang des Summierers (21) gemäss Fig. 2 verbunden. Einem negierenden Eingang dieses Summierers (21) ist das Zwischenkreisstromsignal ($i_{dx}$) zugeführt. Ausgangsseitig ist der Summierer (21) über den PI-Regler mit 2seitigem Begrenzer (22) mit dem Gleichrichter-Zündimpulswandler (12) verbunden. Der Betragsrechner (53), der eingangsseitig ferner mit dem Ausgang des PI-Reglers (52) verbunden ist, berechnet den Betrag des Zeigers, welcher aus den orthogonalen Komponenten seiner Eingangssignale (x) und (y) gebildet wird, gemäss $\sqrt{x^2 + y^2}$.

Dieses in Fig. 4 dargestellte Resonanzdämpfungsverfahren über ($\Delta$f1) kann auch für alle anderen Regelungsverfahren, z. B. Vektorregelung, verwendet werden, welche über ein Frequenzsignal (f1) auf den Wechselrichter (4) einwirken.

Ein 3. Zündimpuls-Regelungsverfahren wird in Verbindung mit Fig. 3 erläutert. Lastspannungssignale ($U_R$, $U_S$, $U_T$) bezüglich der Wechselstromphasen (R, S, T), kurz ($U_{R,S,T}$) bezeichnet, werden über ein Tiefpassfilter (38) und einen Winkeldreher (40), der das Eingangssignal um das Zündwinkel-Grundwertsignal ($\alpha_M$) dreht, einem Digitalisierglied (42) für eine Leitdauer von 180° zugeführt, der ausgangsseitig mit dem Setzeingang eines SR-Kippgliedes (45) verbunden ist. Mit diesem Digitalisierglied (42) wird ein Zündfenster geöffnet. Das Zündwinkel-Grundwertsignal ($\alpha_M$) kann nach einem der o. g. Regelungsverfahren, vgl. die Fig. 2 und 4, gewonnen werden.

Laststromsignale ($i_R$, $i_S$, $i_T$), kurz mit ($i_{R,S,T}$) bezeichnet, sind über ein Bandpassfilter (39) und einen Winkeldreher (41) einem Zündimpulsgenerator (43) zugeführt, der ausgangsseitig mit einem Eingang eines UND-Gliedes (46) in Verbindung steht. Dem Winkeldreher (41) ist ein Drehwinkel ($\varphi$1) von vorzugsweise 90° zugeführt. Der Zündimpulsgenerator (43) erzeugt innerhalb des vom Leitdauergenerator (42) erzeugten Zündfensters bei einem positivgehenden Nulldurchgang einer Resonanzschwingung einen kurzzeitigen Zündimpuls. Dadurch wird der die Thyristoren (Th1 - Th6) steuernde Zündimpuls gegenüber dem Zündwinkel-Grundwertsignal ($\alpha_M$) zeitlich verschoben, entsprechend einer Zündwinkelmodulation.

Ein 2. Eingang des UND-Gliedes (46) ist mit dem Q-Ausgang des SR-Kippgliedes (45) verbunden. Ausgangsseitig ist das UND-Glied (46) mit dem Rücksetzeingang des SR-Kippgliedes (45) und mit dem Steuereingang des Thyristors (Th1) verbunden. Das SR-Kippglied (45) und das UND-Glied (46) sind dem Thyristor (Th1) zugeordnete Teile einer Zündimpulslogikschaltung (44), deren Ausgangssignal mit (S44) bezeichnet ist, das dem Zündimpulssignal (S14) gemäss Fig. 1 entspricht. Für die Zündung der Thyristoren (Th2 - Th6) enthält die Zündimpulslogikschaltung (44) entsprechende Schaltungen wie für den Thyristor (Th1).

Dem Bandpassfilter (39) können eingangsseitig anstelle der Laststromsignale ($i_R$, $i_S$, $i_T$) Kondensatorstromsignale ($i_{CR,CS,CT}$), entsprechend ($i_{CR}$, $i_{CS}$, $i_{CT}$), oder Lastspannungssignale ($U_{R,S,T}$), entsprechend ($U_R$, $U_S$, $U_T$) zugeführt sein.

Gemeinsam ist diesen 3 Regelungsverfahren eine Dämpfung von Oberschwingungen, vorzugsweise der 5. Oberschwingung, durch eine Zündwinkelmodulation des Zündwinkel-Grundwertsignals ($\alpha_M$) für den Wechselrichter (4). Bei den ersten beiden Regelungsverfahren wird zu dem Zündwinkel-Grundwertsignal ($\alpha_M$) oder zu dem Frequenzsignal (f1) ein Differenzsignal ($\Delta\alpha_M$) bzw. ($\Delta$f1) addiert, vgl. Fig. 1 und 4, das allgemein wie folgt definiert ist:

$$\Delta\alpha_M = \sum_{k=1}^{k1} a_k \cdot \sin(k \cdot \omega1 \cdot t + \gamma_k) \text{ bzw.}$$

$$\Delta f1 = \sum_{k=1}^{k1} f_k \cdot \sin(k \cdot \omega1 \cdot t + \gamma_k),$$

wobei $a_k$ und $f_k$ Konstanten, k eine Variable, k1 eine Konstante $\geqq$ 1, $\omega$1 die Kreisfrequenz des netz- und/oder lastseitigen Schwingkreises, t die Zeit und $\gamma_k$ einen Phasenwinkel bedeuten. Vorzugsweise sollte das Modulationssignal $\sin(k \cdot \omega1 \cdot t)$ mit einem Wechselrichterstrom ($i_{4R}$, $i_{4S}$, $i_{4T}$) phasensynchronisiert sein. Dieses Modulationssignal kann durch eine geeignete Wahl von $\gamma_k$ auch so gelegt werden, dass jeweils 2 der 6 Zündzeitpunkte des Wechselrichters (4) durch die Zündwinkeldifferenz ($\Delta\alpha_M$) nicht beeinflusst werden. Auch mit dieser Randbedingung kann z. B. eine 5. Oberschwingung im Wechselrichterausgangsstrom ($i_{4R}$, ...) auf 0 geregelt werden. Insbesondere mit

$$\Delta\alpha_M = a_2 \cdot \sin(2 \cdot \omega1 \cdot t + \gamma_2)$$

oder

$$\Delta f1 = f_2 \cdot \sin(2 \cdot \omega1 \cdot t + \gamma_2)$$

kann die 5. Oberschwingung durch verschieben von nur 4 Zündzeitpunkten (t5, t6, t8, t9) statt 6 eliminiert werden, ohne dass gerade Oberschwingungssysteme oder ein Gleichsystem im Stromrichterstrom entstehen, vgl. Fig. 18. Bei Zündzeitpunkten (t4) und (t7) erfolgt keine Verschiebung.

Fig. 5 zeigt das Zündwinkelsignal ($\alpha_M^*$) in Radiant in Abhängigkeit von der Zeit (t) an der Resonanzstelle für die 5. Oberschwingung bei 40 % der Nenndrehzahl, entsprechend etwa 1/4 des Nennmomentes der Wechselstrommaschine (7).

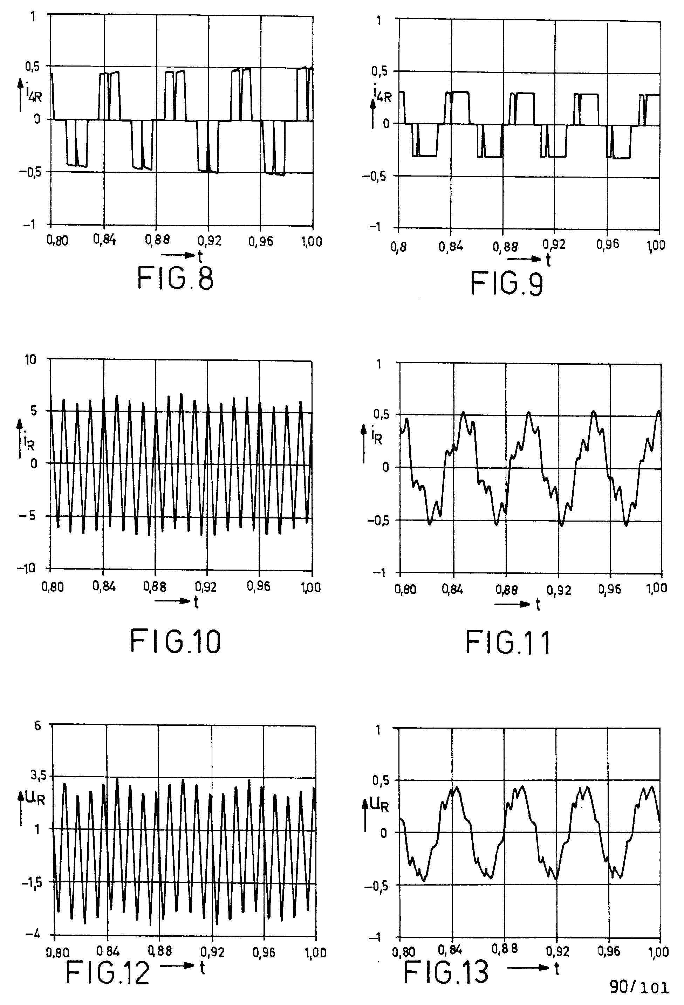

Die nachfolgenden Fig. 6, 8, 10 und 12 zeigen das elektrische Drehmoment (M) der Wechselstrommaschine (7) bzw. den Wechselrichterstrom ($i_{4R}$) bzw. den Laststrom ($i_R$) bzw. die Lastspannung ($U_R$) ohne Dämpfung der 5. Oberschwingung, während die benachbarten Fig. 7, 9, 11 und 13 die gleichen physikalischen Grössen mit Dämpfung der 5. Oberschwingung darstellen. Die dargestellten zeitabhängigen Kurven wurden mittels einer Computersimulation gewonnen; sie zeigen sehr deutlich die Dämpfungswirkung am Beispiel der Wechselstromphase (R).

Der Umrichter (1 - 4) mit seinem Gleichstromzwischenkreis (2, 3) speist in das an seine Ausgangsklemmen angeschlossene System einen eingeprägten Strom ein. Dieser eingeprägte, rechteckförmige Strom kann vorhandene Resonanzstellen im angeschlossenen System auf der Netz- oder auch auf der Maschinenseite anregen. Diese Anregung kann insbesondere auch durch die im Strom enthaltenen Oberschwingungen erfolgen, wobei ein solches System die Oberschwingungen sehr stark verstärken kann. Insbesondere in dem Fall, wo die Frequenz der entsprechenden Oberschwingung genau der Resonanzfrequenz entspricht, entsteht bei einem Schwingkreis hoher Güte eine aufklingende Schwingung, deren Amplitude einzig durch die ohmschen Verluste begrenzt wird. Ein solches resonantes System bildet bei dem o. g. sog. I-Umrichter die Kondensatorbank mit den Lastkondensatoren (CR, CS, CT) und die Streuinduktivitäten der Wechselstrommaschine (7).

Bezeichnet man mit $L_7$ die Summe der Streuinduktivitäten der Wechselstrommaschine (7) und mit C die Kapazität der Kondensatorbank, so ergibt sich die Kreisfrequenz der Resonanz gemäss:

$$\omega_{Res} = 1/\sqrt{L_7 \cdot C}.$$

Bei einer 50-Hz-Wechselstrommaschine (7) beträgt z. B. die Resonanzfrequenz $f_{Res} \approx 100$ Hz. Bei gewissen Drehzahlen treffen die Oberschwingungen des Wechselstromes des Wechselrichters (4) genau diese Resonanzfrequenz. Für die m. Oberschwingung erfolgt dies bei der Ausgangsfrequenz f1 = $f_{Res}$/m.

Bei einer Zündwinkelmodulation mit

EP 0 489 948 B1

$$\Delta\alpha_M \;=\; a_2 \cdot \sin\,(2 \cdot \omega_1 \cdot t)$$

lassen sich optimale $a_2$-Werte durch eine Fourier-Analyse wie folgt bestimmen (OS = Oberschwingung, $n_{Nenn}$ = Nennfrequenz):

| | | |
|---|---|---|
| 5. OS | $a_2 = 0,43$ | $n = 0,4 \cdot n_{Nenn}$, |
| 7. OS | $a_2 = 0,78$ | $n = 0,286 \cdot n_{Nenn}$, |
| 11. OS | $a_2 = 0,19$ | $n = 0,19 \cdot n_{Nenn}$, |
| 13. OS | $a_2 = 0,32$ | $n = 0,154 \cdot n_{Nenn}$. |

Durch die Verwendung zusätzlicher Modulationssignale von z. B. $a_4 \cdot \sin\,(4 \cdot \omega1 \cdot t)$ kann die Summe der Oberschwingungen noch etwas tiefer gehalten werden.

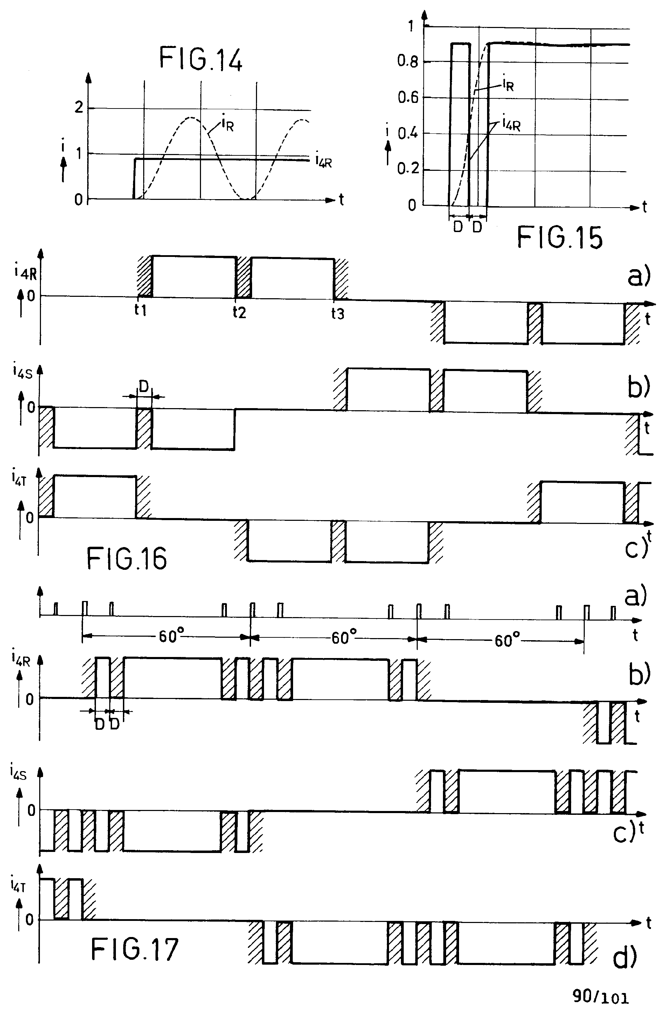

Im unteren Drehzahlbereich eines Antriebes kann diese Resonanzanregung am einfachsten durch eine optimal gewählte Schaltfolge eliminiert werden. Dabei wird eine Stromlückendauer (D), wie sie aus Fig. 15 ersichtlich ist, durch die Resonanzfrequenz ($f_{Res}$) selbst definiert gemäss:

$$D \;=\; 1/(6 \cdot f_{Res}).$$

Diese Stromlückendauer (D) ist eine von der momentanen Drehzahl unabhängige Konstante. Die Stromlücke kann entweder durch einen Ventilwechsel in einem GTO- oder zwangskommutierten I-Umrichter erfolgen oder durch einen Summenlöschkreis (3) des maschinenseitigen Wechselrichters (4) erzeugt werden. Im Falle eines Summenlöschkreises (3) ist diese Stromlücke in allen Stromrichterströmen gleichzeitig zu finden.

Fig. 14 zeigt gestrichelt die Anregung eines resonanten Systems, z. B. des Motorstroms ($i_R$), durch einen rechteckförmigen Stromschritt, z. B. den Laststrom ($i_R$).

Fig. 15 zeigt eine optimale Stromlücke mit einer Stromlückendauer (D) im Wechselrichterstrom ($i_{4R}$) im unteren Drehzahlbereich, wobei, wie bei Fig. 14, auf der Ordinate der Strom (i) und auf der Abszisse die Zeit (t) aufgetragen sind. Aus dem Verlauf des Laststromes ($i_R$) erkennt man, dass dessen Schwingungen stark gedämpft sind. Mit einer derartigen Lücke im Abstand einer Stromlückendauer (D) vom Anfang und Ende eines rechteckförmigen Stromschrittes kann vor allem die 11. und 13. Oberschwingung wirksam gedämpft werden.

Die Fig 17b) bis 17d) zeigen Wechselrichterstromsignale ($i_{4R}$, $i_{4S}$, $i_{4T}$) in Abhängigkeit von der Zeit (t) bezüglich der Wechselstromphasen (R, S, T), bei denen innerhalb der Stromblöcke Stromlücken mit einer Stromlückendauer (D) schraffiert dargestellt sind. Die Stromlücken werden mittels des Summenlöschkreises (3) erzeugt. Die zeitliche Folge der Zündsignale für das Einschalten der Thyristoren (T1) bzw. (T3) des Summenlöschkreises (3), d. h. zum Löschen der Thyristoren (Th1 - Th6) des Wechselrichters (4), ist in Fig. 17a) dargestellt. Durch jeweils eine Stromlücke der Stromlückendauer (D) im Abstand einer Stromlückendauer (D) vom Anfang und Ende jedes Stromblockes werden die 11. und 13. Oberschwingung im unteren Drehzahlbereich der Wechselstrommaschine (7) gedämpft. Die dabei zwangsläufig zusätzlich entstehenden 3 Stromlücken in der Mitte jedes Stromblockes sind dabei unerwünscht, aber unschädlich.

Beim weiteren Hochfahren der Wechselstrommaschine (7) stört die 7. Oberschwingung bei einer Stromrichterausgangsfrequenz von f1 = $f_{Res}$/7 (= 0,286). Diese 7. Oberschwingung wird durch eine Stromlücke mit einer Stromlückendauer (D) in der Mitte jedes Stromblockes gedämpft, vgl. die Fig. 16a) - 16d), in denen die Wechselrichterstromsignale ($i_{4R}$, $i_{4S}$, $i_{4T}$) in Abhängigkeit von der Zeit (t) dargestellt sind. Diese schraffiert dargestellten Stromlücken werden ebenfalls mittels des Summenlöschkreises (3) erzeugt. Zu einem Zeitpunkt (t1), vgl. Fig. 16a), wird mittels des Summenlöschkreises (3) der Wechselrichterstrom ($i_{4T}$), vgl. Fig. 16 c), abgeschaltet. Dadurch entsteht automatisch bei dem Wechselrichterstrom ($i_{4S}$), vgl. Fig. 16 b), eine Stromlücke in der Mitte des Stromblockes. Die Dauer der Stromlücke wird gleich (D) eingestellt. Zu einem späteren Zeitpunkt (t2) wird mittels des Summenlöschkreises (3) der Wechselrichterstrom ($i_{4S}$) abgeschaltet. Dadurch entsteht automatisch eine Stromlücke in der Mitte des Stromblockes des Wechselrichterstromes ($i_{4R}$). Beim Abschalten des Wechselrichterstromes ($i_{4R}$) in einem Zeitpunkt (t3) entsteht eine Stromlücke in der Mitte des Stromblockes des Wechselrichterstromes ($i_{4T}$) usw.

Der in Fig. 1 dargestellte Summenlöschkreis (3) erlaubt insbesondere auch bei fest vorgegebenen Komponenten (C1) und (Dr) die Dauer der Stromlücke durch die Steuerung des Thyristors (T2) entsprechend zu variieren und somit optimal einzustellen.

Im Bereich, wo die 5. Oberschwingung auf die Resonanzstelle trifft (f1 = $f_{Res}$/5 = 0,4), wird die Amplitude der überlagerten Resonanzschwingung durch die Wahl von optimalen Zündzeitpunkten des Wechselrichters (4) tief gehalten. Dabei muss die 5. Oberschwingung im Wechselrichterstrom ($i_{4R}$, ...) auf 0 geregelt oder die Resonanzschwingung in der Spannung oder im Maschinenstrom oder im Kondensatorstrom ($i_{CR}$) erfasst und ausgewertet werden. Alle diese Modulationsverfahren werden bei Grundfrequenztaktung durchgeführt. Dies ermöglicht, insbesondere in Verbindung mit einfachen, langsamen und hochbelastbaren Thyristoren, einen hohen Wirkungsgrad für leistungsstarke Antriebe.

7

## Patentansprüche

1. Verfahren zur Eliminierung oder Reduzierung mindestens einer Oberschwingung eines Stromrichters (4), der mit mindestens einem netz- und/oder lastseitigen Schwingkreis bzw. mit mindestens einer reaktiven Last (CR, CS, CT; 7) in Wirkverbindung steht, und/oder zur Eliminierung oder Reduzierung von Resonanzschwingungen des netz- und/oder lastseitigen Schwingkreises,

   a) wobei in Abhängigkeit vom Durchfahren eines resonanten Frequenzbereiches eines Wechselstromes bzw. eines Laststromes ($i_R$, $i_S$, $i_T$) mindestens ein Steuerzeitpunkt bzw. ein Zündwinkel-Grundwertsignal ($\alpha_M$) oder ein Frequenzsignal (f1) eines steuerbaren Ventils (Th1 - Th6) des Stromrichters (4) durch ein zeitliches Verschieben des Einschaltzeitpunktes im Sinne einer Phasenverschiebung verändert wird,

   b) wobei der Steuerzeitpunkt bzw. das Zündwinkel-Grundwertsignal ($\alpha_M$) oder Frequenzsignal (f1) durch ein Zündwinkeldifferenzsignal ($\Delta\alpha_M$) bzw. durch ein Frequenzdifferenzsignal ($\Delta$f1) gemäss einer goniometrischen Funktion der Art:

$$\Delta\alpha_M = \sum_{k=1}^{k1} a_k \cdot \sin(k \cdot \omega 1 \cdot t + \gamma_k) \quad \text{bzw.}$$

$$\Delta f1 = \sum_{k=1}^{k1} f_k \cdot \sin(k \cdot \omega 1 \cdot t + \gamma_k)$$

   verändert wird, wobei $a_k$ und $f_k$ Konstanten, k eine Variable, k1 eine Konstante $\geqq$ 1, $\omega$1 die Kreisfrequenz des netz- und/oder lastseitigen Schwingkreises, t die Zeit und $\gamma_k$ einen Phasenwinkel bedeuten.

2. Verfahren nach Anspruch 1, dadurch gekennzeichnet, dass das Signal sin ($k \cdot \omega 1 \cdot t$) phasensynchron zu einem Stromrichterstrom ($i_{4R}$, $i_{4S}$, $i_{4T}$) gewählt wird.

3. Verfahren nach Anspruch 1 oder 2, dadurch gekennzeichnet, dass das Zündwinkeldifferenzsignal ($\Delta\alpha_M$) oder das Frequenzdifferenzsignal ($\Delta$f1) aus Stromsignalen bzw. Stromrichterstromsignalen ($i_{4R}$, $i_{4S}$, $i_{4T}$) oder Laststromsignalen ($i_R$, $i_S$, $i_T$) oder Kondensatorstromsignalen ($i_{CR, CS, CT}$) oder Spannungssignalen bzw. Lastspannungssignalen ($U_{R,S,T}$) durch eine Transformation (31) in ein rotierendes Koordinatensystem, dessen Rotationsfrequenz zumindest angenähert der Frequenz der zu eliminierenden oder zu reduzierenden Oberschwingungen entspricht, durch anschliessende Tiefpassfilterung (32, 33), nachfolgende Proportional-Integralregelung (36, 37), insbesondere in zueinander orthogonalen Koordinaten, und anschliessende Transformation (30) in ein mit vorgebbarer Frequenz umlaufendes Koordinatensystem erzeugt wird.

4. Verfahren nach einem der Ansprüche 1 bis 3 dadurch gekennzeichnet, dass, insbesondere zur Dämpfung der 7. Oberschwingung, in der Mitte eines Stromblockes des Stromrichterstromes eine Stromlücke mit einer vorgebbaren Stromlückendauer (D) erzeugt wird.

5. Verfahren nach Anspruch 4, dadurch gekennzeichnet,

   a) dass die Dauer einer Stromlücke im Stromblock bzw. die Stromlückendauer (D) gleich:
$$D = 1/(6 \cdot f_{Res})$$
   ist, $f_{Res}$ = Grundfrequenz des Schwingkreises,

   b) insbesondere, dass die Stromlücken mit der Stromlückendauer (D) durch einen allen steuerbaren Ventilen des Stromrichters (4) gemeinsamen Summenlöschimpuls bzw. Löschimpuls eines Summenlöschkreises bzw. Löschkreises (3) oder durch einen erzwungenen Kurzschluss im Stromrichter (4) erzeugt werden.

6. Verfahren nach Anspruch 1, dadurch gekennzeichnet, dass das Verschieben des Einschaltzeitpunktes für das mindestens eine steuerbare Ventil (Th1 - Th6) in Abhängigkeit von Stromsignalen bzw. Laststromsignalen ($i_R$, $i_S$, $i_T$) oder Kondensatorstromsignalen ($i_{CR,CS,CT}$) oder Spannungssignalen bzw. Lastspannungssignalen ($U_{R,S,T}$) durch eine Bandpassfilterung (39) mit nachfolgender Detektion (41) eines ansteigenden Nulldurchgangs des gefilterten Signals erzeugt wird.

7. Vorrichtung zur Eliminierung oder Reduzierung mindestens einer Oberschwingung eines Stromrichters (4), der mit mindestens einem netz- und/oder lastseitigen Schwingkreis bzw. mit mindestens einer reaktiven Last (CR, CS, CT; 7) in Wirkverbindung steht, und/oder zur Eliminierung oder Reduzierung von Resonanzschwingungen des netz- oder lastseitigen Schwingkreises,

a) welcher Stromrichter ein Brücken-Wechselrichter mit Thyristoren (Th1 - Th6) in seinen Brückenzweigen ist, deren Steuereingänge mit einem Wechselrichter-Zündimpulswandler (14) in Wirkverbindung stehen,

dadurch gekennzeichnet,

b) dass ein Summierer (13) vorgesehen ist, dem eingangsseitig ein Zündwinkel-Grundwertsignal ($\alpha_M$) und ein Zündwinkeldifferenzsignal ($\Delta\alpha_M$) zugeführt sind und der ausgangsseitig mit dem Wechselrichter-Zündimpulswandler (14) in Steuerverbindung steht,

c) dass als Zündwinkelverstellglied ein Resonanzdämpfungsglied (27), insbesondere für die 5. Oberschwingung des Schwingkreises, vorgesehen ist, dem eingangsseitig Stromsignale bzw. Stromrichterstromsignale ($i_{4R}$, $i_{4S}$, $i_{4T}$) oder Laststromsignale ($i_R$, $i_S$, $i_T$) oder Kondensatorstromsignale ($i_{CR,CS,CT}$) oder Spannungssignale bzw. Lastspannungssignale ($U_{R,S,T}$), welche die zu dämpfende Oberschwingung enthalten, zugeführt sind, und das ausgangsseitig mit dem Summierer (13) in Wirkverbindung steht,

d) dass das Resonanzdämpfungsglied (27) eingangsseitig einen 3Phasen/2Phasen-Koordinatenwandler (31) aufweist, dessen 2Phasen-Ausgänge, die als Gleichanteil 2 zueinander orthogonale Komponenten der zu eliminierenden oder zu reduzierenden Oberschwingungen enthalten, über je ein Tiefpassfilter (32, 33) mit jeweils nachgeschaltetem PI-Regler (36, 37) mit 2Phasen-Eingängen eines 2Phasen/3Phasen-Koordinatenwandlers (30) in Wirkverbindung stehen, an dem ausgangsseitig das Zündwinkeldifferenzsignal ($\Delta\alpha_M$) abgreifbar ist,

e) dass Koordinatenwinkeleingänge des 3Phasen/2Phasen-Koordinatenwandlers (31) über einen Funktionsgenerator für goniometrische Funktionen (29) mit einem Phasenregelkreis (28) in Wirkverbindung stehen, dem eingangsseitig, ebenso wie dem 3Phasen/2Phasen-Koordinatenwandler (31), die Eingangssignale des Resonanzdämpfungsgliedes (27) zugeführt sind, und

f) dass der Funktionsgenerator für goniometrische Funktionen (29) ausgangsseitig über einen Winkeldreher (59) mit vorgebbarem Drehwinkel ($\psi$) mit Koordinatenwinkeleingängen des 2Phasen/3Phasen-Koordinatenwandlers (30) in Wirkverbindung steht.

8. Vorrichtung zur Eliminierung oder Reduzierung mindestens einer Oberschwingung eines Stromrichters (4), der mit mindestens einem netz- und/oder lastseitigen Schwingkreis bzw. mit mindestens einer reaktiven Last (CR, CS, CT; 7) in Wirkverbindung steht, und/oder zur Eliminierung oder Reduzierung von Resonanzschwingungen des netz- oder lastseitigen Schwingkreises,

a) welcher Stromrichter ein Brücken-Wechselrichter mit Thyristoren (Th1 - Th6) in seinen Brückenzweigen ist, deren Steuereingänge mit einem Wechselrichter-Zündimpulswandler (14) in Wirkverbindung stehen,

dadurch gekennzeichnet,

b) dass ein Summierer (13) vorgesehen ist, dem eingangsseitig ein Frequenzsignal (f1) und ein Frequenzdifferenzsignal ($\Delta$f1) zugeführt sind und der ausgangsseitig mit dem Wechselrichter-Zündimpulswandler (14) in Steuerverbindung steht,

c) dass als Zündwinkelverstellglied ein Resonanzdämpfungsglied (27), insbesondere für die 5. Oberschwingung des Schwingkreises, vorgesehen ist, dem eingangsseitig Stromsignale bzw. Stromrichterstromsignale ($i_{4R}$, $i_{4S}$, $i_{4T}$) oder Laststromsignale ($i_R$, $i_S$, $i_T$) oder Kondensatorstromsignale ($i_{CR, CS, CT}$) oder Spannungssignale bzw. Lastspannungssignale ($U_{R,S,T}$), welche die zu dämpfende Oberschwingung enthalten, zugeführt sind, und das ausgangsseitig mit dem Summierer (13) in Wirkverbindung steht,

d) dass das Resonanzdämpfungsglied (27) eingangsseitig einen 3Phasen/2Phasen-Koordinatenwandler (31) aufweist, dessen 2Phasen-Ausgänge, die als Gleichanteil 2 zueinander orthogonale Komponenten der zu eliminierenden oder zu reduzierenden Oberschwingungen enthalten, über je ein Tiefpassfilter (32, 33) mit jeweils nachgeschaltetem PI-Regler (36, 37) mit 2Phasen-Eingängen eines 2Phasen/3Phasen-Koordinatenwandlers (30) in Wirkverbindung stehen, an dem ausgangsseitig das Frequenzdifferenzsignal ($\Delta$f1) abgreifbar ist,

e) dass Koordinatenwinkeleingänge des 3Phasen/2Phasen-Koordinatenwandlers (31) über einen Funktionsgenerator für goniometrische Funktionen (29) mit einem Phasenregelkreis (28) in Wirkverbindung stehen, dem eingangsseitig, ebenso wie dem 3Phasen/2Phasen-Koordinatenwandler (31), die Eingangssignale des Resonanzdämpfungsgliedes (27) zugeführt sind, und

f) dass der Funktionsgenerator für goniometrische Funktionen (29) ausgangsseitig über einen Winkeldreher (59) mit vorgebbarem Drehwinkel ($\psi$) mit Koordinatenwinkeleingängen des 2Phasen/3Phasen-Koordinatenwandlers (30) in Wirkverbindung steht.

9. Vorrichtung zur Durchführung des Verfahrens des Anspruches 1, wobei ein Stromrichter (4) ein Brücken-Wechselrichter mit Thyristoren (Th1 - Th6) in seinen Brückenzweigen ist, deren Steuereingänge mit einem Wechselrichter-Zündimpulswandler (43) in Wirkverbindung stehen, dadurch gekennzeichnet, dass als Zündwinkelverstellglied ein Winkeldreher (41) vorgesehen ist, der eingangsseitig mit einem Bandpassfilter (39) und ausgangsseitig mit dem Zündimpulsgenerator (43) in Wirkverbindung steht, wobei dem Bandpassfilter (39) eingangsseitig Stromsignale bzw. Stromrichterstromsignale ($i_{4R}$, $i_{4S}$, $i_{4T}$) oder Laststromsignale ($i_R$, $i_S$, $i_T$) oder Kondensatorstromsignale ($i_{CR,CS,CT}$) oder Spannungssignale bzw. Lastspannungssignale ($U_{R,S,T}$), welche die zu dämpfende Oberschwingung enthalten, zugeführt sind (Fig. 3).

10. Vorrichtung nach einem der Ansprüche 7 bis 9, dadurch gekennzeichnet,

a) dass parallel zu dem Wechselrichter (4) ein Summenlöschkreis (3) geschaltet ist,

b) der eine 1. Reihenschaltung mindestens eines Löschkondensators (C1) und mindestens eines 1. elektrischen Ventils (T2) aufweist, welche 1. Reihenschaltung mit einer positiven Anspeiseklemme (+) und einer negativen Anspeiseklemme (-) in Wirkverbindung steht,

c) dass in einem Parallelzweig zu dem mindestens einen Löschkondensator (C1) eine 2. Reihenschaltung mindestens eines induktiven Widerstandes (Dr) mit einem steuerbaren 2. elektrischen Ventil (T1) vorgesehen ist, dessen negative Potentialseite mit dem Löschkondensator (C1) in Wirkverbindung steht, und

d) dass in einem Parallelzweig zu dem 2. elektrischen Ventil (T1) ein steuerbares 3. elektrisches Ventil (T3) vorgesehen ist, wobei die Stromflussrichtung des 3. elektrischen Ventils (T3) entgegengesetzt zu derjenigen des 2. elektrischen Ventils (T1) ist.

## Claims

1. Process for eliminating or reducing at least one harmonic of a static converter (4), which is operationally connected to at least one line-side and/or load-side resonant circuit or to at least one reactive load (CR, CS, CT; 7), and/or for eliminating or reducing resonance oscillations of the line-side and/or load-side resonant circuit,

a) at least one control instant or turn-on angle basic value signal ($\alpha_M$) or a frequency signal (f1) of a controllable valve (Th1 - Th6) of the static converter (4) being varied by a temporal displacement of the turn-on instant in the sense of a phase shift as a function of passage of at least one resonant frequency range of an alternating current or load current ($i_R$, $i_S$, $i_T$),

b) the control instant or turn-on angle basic value signal ($\alpha_M$) or frequency signal (f1) being varied by a turn-on angle differential signal ($\Delta\alpha_M$) or by a differential frequency signal ($\Delta$f1), in accordance with a goniometric function of the type:

$$\Delta\alpha_M = \sum_{k=1}^{k1} a_k \cdot \sin(k \cdot \omega 1 \cdot t + \gamma_k)$$

or

$$\Delta f1 = \sum_{k=1}^{k1} f_k \cdot \sin(k \cdot \omega 1 \cdot t + \gamma_k)$$

where $a_k$ and $f_k$ signify constants, k a variable, k1 a constant $\geq$ 1, $\omega$1 the angular frequency of the line-side and/or load-side resonant circuit, t the time and $\gamma_k$ a phase angle.

2. Process according to Claim 1, characterized in that the signal sin (k . $\omega$1 . t) is selected to be be phase-synchronous with respect to a static converter current ($i_{4R}$, $i_{4S}$, $i_{4T}$).

3.  Process according to Claim 1 or 2, characterized in that the turn-on angle differential signal ($\Delta\alpha_M$) or the differential frequency signal ($\Delta f1$) is generated from current signals or static converter current signals ($i_{4R}$, $i_{4S}$, $i_{4T}$), or load current signals ($i_R$, $i_S$, $i_T$) or capacitor current signals ($i_{CR,CS,CT}$) or voltage signals or load voltage signals ($U_{R,S,T}$) by a transformation (31) into a rotating coordinate system whose rotational frequency corresponds at least approximately to the frequency of the harmonics to be eliminated or to be reduced, by subsequent low-pass filtering (32, 33), subsequent proportional-integral control (36, 37), in particular in mutually orthogonal coordinates, and subsequent transformation (30) into a coordinate system rotating with a prescribable frequency.

4.  Process according to one of Claims 1 to 3, characterized in that, in particular for damping the 7th harmonic, a current gap with a prescribable current gap duration (D) is generated in the middle of a current block of the static converter current.

5.  Process according to Claim 4, characterized in that
    a) the duration of a current gap in the current block or current gap duration (D) is equal to:
    $$D = 1/(6 \cdot f_{Res}),$$
    where $f_{Res}$ = fundamental frequency of the resonant circuit,
    b) in particular, the current gaps with the current gap duration (D) are generated by a common quenching pulse common to all the controllable valves of the static converter (4) or the quenching pulse of a common quenching circuit or quenching circuit (3) or by a forced short circuit in the static converter (4).

6.  Process according to Claim 1, characterized in that the displacement of the turn-on instant for the at least one controllable valve (Th1 - Th6) is generated as a function of current signals or load current signals ($i_R$, $i_S$, $i_T$) or capacitor current signals ($i_{CR,CS,CT}$) or voltage signals or load voltage signals ($U_{R,S,T}$) by bandpass filtering (39) with subsequent detection (41) of a rising zero crossing of the filtered signal.

7.  Device for eliminating or reducing at least one harmonic of a static converter (4), which is operationally connected to at least one line-side and/or load-side resonant circuit or to at least one reactive load (CR, CS, CT; 7), and/or for eliminating or reducing resonance oscillations of the line-side or load-side resonant circuit,
    a) which static converter is a bridge-connected inverter with thyristors (Th1 - Th6) in its bridge arms, whose control inputs are operationally connected to an inverter turn-on pulse converter (14), characterized in that
    b) a summer (13) is provided which is fed on the input side with a turn-on angle basic value signal ($\alpha_M$) and a turn-on angle differential signal ($\Delta\alpha_M$), and which on the output side is connected for control purposes to the inverter turn-on pulse transformer (14),
    c) there is provided as a turn-on angle adjuster a resonance damping element (27), particularly for the 5th harmonic of the resonant circuit, which is fed on the input side with current signals or static converter current signals ($i_{4R}$, $i_{4S}$, $i_{4T}$) or load current signals ($i_R$, $i_S$, $i_T$) or capacitor current signals ($i_{CR,CS,CT}$) or voltage signals or load voltage signals ($U_{R,S,T}$), which contain the harmonic to be damped, and which on the output side is operationally connected to the summer (13),
    d) on the input side the resonance damping element (27) has a 3-phase/2-phase coordinate converter (31) whose 2-phase outputs, which contain as direct component 2 mutually orthogonal components of the harmonics to be eliminated or to be reduced, are operationally connected via a low-pass filter (32, 33) each with a downstream PI controller (36, 37) in each case to 2-phase inputs of a 2-phase/3-phase coordinate converter (30), at which the turn-on angle differential signal ($\Delta\alpha_M$) can be tapped on the output side,
    e) coordinate angle inputs of the 3-phase/2-phase coordinate converter (31) are operationally connected via a function generator for goniometric functions (29) to a phase-locked loop (28) which, just like the 3-phase/2-phase coordinate converter (31) is fed on the input side with the input signals of the resonance damping element (27), and
    f) on the output side, the function generator for goniometric functions (29) is operationally connected via a phase rotator (59) with a prescribable angle of rotation ($\psi$) to coordinate angle inputs of the 2-phase/3-phase coordinate converter (30).

8.  Device for eliminating or reducing at least one harmonic of a static convertor (4), which is operationally connected to at least one line-side and/or load-side resonant circuit or to at least one reactive load (CR, CS, CT; 7), and/or for eliminating or reducing resonance oscillations of the line-side or load-side resonant circuit,

a) which static converter is a bridge-connected inverter with thyristors (Th1 - Th6) in its bridge arms, whose control inputs are operationally connected to an inverter turn-on pulse converter (14), characterized in that

b) a summer (13) is provided which is fed on the input side with a frequency signal (f1) and a differential frequency signal ($\Delta$f1), and which on the output side is connected for control purposes to the inverter turn-on pulse transformer (14),

c) there is provided as a turn-on angle adjuster a resonance damping element (27), particularly for the 5th harmonic of the resonant circuit, which is fed on the input side with current signals or static converter current signals ($i_{4R}$, $i_{4S}$, $1_{4T}$) or load current signals ($i_R$, $i_S$, $1_T$) or capacitor current signals ($i_{CR,CS,CT}$) or voltage signals or load voltage signals ($U_{R,S,T}$), which contain the harmonic to be damped, and which on the output side is operationally connected to the summer (13),

d) on the input side the resonance damping element (27) has a 3-phase/2-phase coordinate converter (31) whose 2-phase outputs, which contain as direct component 2 mutually orthogonal components of the harmonics to be eliminated or to be reduced, are optionally connected via a low-pass filter (32, 33) each with a downstream PI controller (36, 37) in each case to 2-phase inputs of a 2-phase/3-phase coordinate converter (30), at which the differential frequency signal ($\Delta$f1) can be trapped on the output side,

e) coordinate angle inputs of the 3-phase/2-phase coordinate converter (31) are operationally connected via a function generator for goniometric functions (29) to a phase-locked loop (28) which, just like the 3-phase/2-phase coordinate converter (31) is fed on the input side with the input signals of the resonance damping element (27), and

f) on the output side, the function generator for goniometric functions (29) is operationally connected via a phase rotator (59) with a prescribable angle of rotation ($\psi$) to coordinate angle inputs of the 2-phase/3-phase coordinate converter (30).

9. Device for carrying out the process of Claim 1, a static converter (4) being a bridge-connected inverter with thyristors (Th1 - Th6) in its bridge arms, whose control inputs are operationally connected to an inverter turn-on pulse converter (43), characterized in that as turn-on angle adjuster a phase rotator (41) is provided, which on the input side is operationally connected to a bandpass filter (39) and on the output side to the turn-on pulse generator (43), the bandpass filter (39) being fed on the input side with current signals or static converter current signals ($i_{4R}$, $i_{4S}$, $i_{4T}$) or load current signals ($i_R$, $i_S$, $i_T$) or capacitor current signals ($i_{CR,CS,CT}$) or voltage signals or load voltage signals ($U_{R,S,T}$), which contain the harmonic to be damped (Figure 3).

10. Device according to one of Claims 7 to 9, characterized in that

a) connected in parallel with the inverter (4) is a common quenching circuit (3),

b) which has a first series circuit of at least one quenching capacitor (C1) and at least a first electrical valve (T2), which first series circuit is operationally connected to a positive supply terminal (+) and a negative supply terminal (-),

c) in a parallel circuit to the at least one quenching capacitor (C1) there is provided a second series circuit of at least one inductive reactance (Dr) with a controllable second electrical valve (T1) whose negative potential side is operationally connected to the quenching capacitor (C1), and

d) a controllable third electrical valve (T3) is provided in a parallel circuit to the second electrical valve (T1), the direction of current flow of the third electrical valve (T3) being opposite to that of the second electrical valve (T1).

## Revendications

1. Procédé pour éliminer ou réduire au moins un harmonique d'un convertisseur statique (4), qui est opérationnellement connecté à au moins un circuit résonnant côté ligne et/ou côté ligne ou à au moins une charge réactive (CR, CS, CT; 7) et/ou pour éliminer ou réduire des oscillations de résonnance du circuit résonnant côté ligne et/ou côté charge,

a) au moins un instant de commande ou signal de valeur élémentaire d'angle de déblocage ($\alpha_M$) ou un signal de fréquence (f1) d'un tube contrôlable (Th1 - Th6) du convertisseur statique (4) étant varié par un déplacement temporel de l'instant de déblocage dans le sens d'un déphasage en fonction du passage d'au moins une gamme de fréquences de résonnance d'un courant alternatif ou d'un courant de charge ($i_R$, $i_S$, $i_T$),

b) l'instant de commande ou le signal de valeur élémentaire d'angle de déblocage ($\alpha_M$) ou le signal de fréquence (f1) étant varié par un signal différentiel d'angle de déblocage ($\Delta\alpha_M$) ou par un signal de fréquence différentiel ($\Delta$f1), conformément à une fonction goniométrique du type:

$$\Delta\alpha_M = \sum_{k=1}^{k1} a_k \cdot \sin(k \cdot \omega 1 \cdot t + \tau_k)$$

ou

$$\Delta f1 = \sum_{k=1}^{k1} f_k \cdot \sin(k \cdot \omega 1 \cdot t + \tau_k)$$

où $a_k$ et $f_k$ représentent des constantes, k une variable, k1 une constante $\geq 1$, $\omega 1$ la fréquence angulaire du circuit résonnant côté ligne et/ou côté charge, t le temps et $\tau_k$ un angle de phase.

2. Procédé selon la revendication 1, caractérisé en ce que le signal sin ($k \cdot \omega 1 \cdot t$) est sélectionné pour être synchrone en phase par rapport à un courant de convertisseur statique ($i_{4R}$, $i_{4S}$, $i_{4T}$).

3. Procédé selon la revendication 1 ou 2, caractérisé en ce que le signal différentiel d'angle de déblocage ($\Delta\alpha_M$) ou le signal de fréquence différentiel ($\Delta$f1) est généré à partir de signaux de courant ou de signaux de courant de convertisseur statique ($i_{4R}$, $i_{4S}$, $i_{4T}$), ou de signaux de courant de charge ($i_R$, $i_S$, $i_T$), ou de signaux de courant de condensateur ($i_{CR,CS,CT}$) ou de signaux de tension ou de signaux de tension de charge ($U_{R,S,T}$) par une transformation (31) dans un système de coordonnées rotatif dont la fréquence rotationnelle correspond au moins approximativement à la fréquence des harmoniques à éliminer ou à réduire, par filtrage passe-bas subséquent (32, 33), commande proportionnelle-intégrale subséquente (36, 37), en particulier dans des coordonnées mutuellement orthogonales, et transformation subséquente (30) dans un système de coordonnées tournant à une fréquence déterminable.

4. Procédé selon l'une des revendications 1 à 3, caractérisé en ce que, en particulier pour l'amortissement du 7ème harmonique, un écart de courant d'une durée d'écart de courant (D) déterminable est généré au milieu d'un bloc de courant du courant de convertisseur statique.

5. Procédé selon la revendication 4, caractérisé en ce que
a) la durée d'un écart de courant dans le bloc de courant ou durée d'écart de courant (D) est égale à:
$$D = 1/(6 \cdot f_{Res}),$$
où $f_{Res}$ = fréquence fondamentale du circuit résonnant,
b) en particulier, les écarts de courant de la durée d'écart de courant (D) sont générés par une impulsion d'extinction commune à tous les tubes contrôlables du convertisseur statique (4) ou l'impulsion d'extinction d'un circuit d'extinction commun ou d'un circuit d'extinction (3) ou par un court-circuit forcé dans le convertisseur statique (4).

6. Procédé selon la revendication 1, caractérisé en ce que le déplacement de l'instant de déblocage pour au moins le tube contrôlable (Th1 - Th6) est généré en fonction de signaux de courant ou de signaux de courant de charge ($i_R$, $i_S$, $i_T$) ou de signaux de courant de condensateur ($i_{CR,CS,CT}$) ou de signaux de tension ou de signaux de tension de charge ($U_{R,S,T}$) par filtrage en bande passante (39) avec détection subséquente (41) d'un passage au zéro positif du signal filtré.

7. Dispositif pour éliminer ou réduire au moins un harmonique d'un convertisseur statique (4), qui est opérationnellement connecté à au moins un circuit résonnant côté ligne et/ou côté charge ou à au moins une charge réactive (CR, CS, CT; 7) et/ou pour éliminer ou réduire des oscillations de résonnance du circuit résonnant côté ligne et/ou côté charge,
a) ledit convertisseur statique est un onduleur monté en pont avec des thyristors (Th1 - Th6) dans ses branches de pont, dont les entrées de commande sont opérationnellement connectées à un conver-

EP 0 489 948 B1

tisseur d'impulsions de déblocage d'onduleur (14), caractérisé en ce que

b) un circuit de sommation (13) est fourni, recevant du côté entrée un signal de valeur élémentaire d'angle de déblocage ($\alpha_M$) et un signal différentiel d'angle de déblocage ($\Delta\alpha_M$), et qui du côté sortie est connecté pour la commande au transformateur d'impulsions de déblocage d'onduleur (14),

c) comme système de réglage d'angle de déblocage est fourni un élément d'amortissement de résonnance (27), particulièrement pour le 5ème harmonique du circuit résonnant, qui reçoit du côté entrée des signaux de courant ou des signaux de courant de convertisseur statique ($i_{4R}$, $i_{4S}$, $i_{4T}$), ou des signaux de courant de charge ($i_R$, $i_S$, $i_T$) ou des signaux de courant de condensateur ($i_{CR,CS,CT}$) ou des signaux de tension ou des signaux de tension de charge ($U_{R,S,T}$), qui contiennent l'harmonique à amortir, et qui du côté sortie est opérationnellement connecté au circuit de sommation (13),

d) du côté entrée l'élément d'amortissement de résonnance (27) a un convertisseur (31) de coordonnées triphasées/biphasées dont les sorties biphasées, qui contiennent comme composante continue 2 composantes mutuellement orthogonales des harmoniques à éliminer ou à réduire, sont opérationnellement connectées par l'intermédiaire d'un filtre passe-bas (32, 33) chacun avec un contrôleur PI en aval (36, 37) dans chaque cas à des entrées biphasées d'un convertisseur de coordonnées biphasées/triphasées (30), au niveau duquel le signal différentiel d'angle de déblocage ($\Delta\alpha_M$) peut être prélevé du côté sortie,

e) des entrées d'angle de coordonnées du convertisseur de coordonnées triphasées/biphasées (31) sont opérationnellement connectées par l'intermédiaire d'un générateur de fonctions goniométriques (29) à une boucle à verrouillage de phase (28) qui, tout comme le convertisseur de coordonnées triphasées/biphasées (31) reçoit du côté entrée les signaux d'entrée de l'élément d'amortissement de résonnance (27), et

f) du côté sortie, le générateur de fonctions goniométriques (29) est opérationnellement connecté par l'intermédiaire d'un rotateur de phase (59) par un angle de rotation définissable ($\psi$) à des entrées d'angle de coordonnées du convertisseur de coordonnées biphasées/triphasées (30).

8. Dispositif pour éliminer ou réduire au moins un harmonique d'un convertisseur statique (4), qui est opérationnellement connecté à au moins un circuit résonnant côté ligne et/ou côté charge ou à au moins une charge réactive (CR, CS, CT; 7) et/ou pour éliminer ou réduire des oscillations de résonance du circuit résonnant côté ligne et/ou côté charge,

a) ledit convertisseur statique est un onduleur monté en pont avec des thyristors (Th1 - Th6) dans ses branches de pont, dont les entrées de commande sont opérationnellement connectées à un convertisseur d'impulsions de déblocage d'onduleur (14), caractérisé en ce que

b) un circuit de sommation (13) est fourni, recevant du côté entrée un signal de fréquence (f1) et un signal de fréquence différentiel ($\Delta f1$), et qui du côté sortie est connecté pour la commande au transformateur d'impulsions de déblocage d'onduleur (14),

c) comme système de réglage d'angle de déblocage est fourni un élément d'amortissement de résonnance (27), particulièrement pour le 5ème harmonique du circuit résonnant, qui reçoit du côté entrée des signaux de courant ou des signaux de courant de convertisseur statique ($i_{4R}$, $i_{4S}$, $i_{4T}$) ou des signaux de courant de charge ($i_R$, $i_S$, $i_T$) ou des signaux de courant de condensateur ($i_{CR,CS,CT}$) ou des signaux de tension ou des signaux de tension de charge ($U_{R,S,T}$), qui contiennent l'harmonique à amortir, et qui du côté sortie est opérationnellement connecté au circuit de sommation (13),

d) du côté entrée l'élément d'amortissement de résonnance (27) a un convertisseur de coordonnées triphasées/biphasées (31) dont les sorties biphasées, qui contiennent comme composante continue 2 composantes mutuellement orthogonales des harmoniques à éliminer ou à réduire, sont opérationnellement connectées par l'intermédiaire d'un filtre passe-bas (32, 33) chacun avec un contrôleur PI en aval (36, 37) dans chaque cas à des entrées biphasée d'un convertisseur de coordonnées biphasées/triphasées (30), au niveau duquel le signal de fréquence différentiel ($\Delta f1$) peut être prélevé du côté sortie,

e) des entrées d'angle de coordonnées du convertisseur de coordonnées triphasées/biphasées (31) sont opérationnellement connectées par l'intermédiaire d'un générateur de fonctions goniométriques (29) à une boucle à verrouillage de phase (28) qui, tout comme le convertisseur de coordonnées triphasées/biphasées (31) reçoit du côté entrée les signaux d'entrée de l'élément d'amortissement de résonnance (27), et

f) du côté sortie, le générateur de fonctions goniométriques (29) est opérationnellement connecté par l'intermédiaire d'un rotateur de phase (59) par un angle de rotation définissable ($\psi$) à des entrées d'angle de coordonnées du convertisseur de coordonnées biphasées/triphasées (30).

9. Dispositif pour effectuer le procédé de la revendication 1, un convertisseur statique étant un onduleur monté en pont avec des thyristors (Th1 - Th6) dans ses branches de pont, dont les entrées de commande sont opérationnellement connectées à un convertisseur d'impulsions de déblocage d'onduleur (43), caractérisé en ce que comme système de réglage d'angle de déblocage un rotateur de phase (41) est fourni, lequel du côté entrée est opérationnellement connecté à un filtre de bande passante (39) et du côté sortie au générateur d'impulsions de déblocage (43), le filtre de bande passante (39) recevant du côté entrée des signaux de courant ou des signaux de courant de convertisseur statique ($i_{4R}$, $i_{4S}$, $i_{4T}$), ou des signaux de courant de charge ($i_R$, $i_S$, $i_T$) ou des signaux de courant de condensateur ($i_{CR,CS,CT}$) ou des signaux de tension ou des signaux de tension de charge ($U_{R,S,T}$) qui contiennent l'harmonique à amortir (figure 3).

10. Dispositif selon l'une des revendications 7 à 9, caractérisé en ce que
   a) à l'onduleur (4) est connecté en parallèle un circuit d'extinction commun (3),
   b) qui a un premier circuit série d'au moins un condensateur étouffant (C1) et au moins un premier tube électrique (T2), lequel premier circuit série est opérationnellement connecté à une borne d'alimentation positive (+) et une borne d'alimentation négative (-),
   c) dans un circuit parallèle à au moins le condensateur étouffant (C1) est fourni un second circuit série d'au moins une réactance conductive (Dr) avec un deuxième tube électrique contrôlable (T1) dont le côté au potentiel négatif est opérationnellement connecté au condensateur étouffant (C1), et
   d) un troisième tube électrique contrôlable (T3) est fourni dans un circuit parallèle au deuxième tube électrique (T1), le sens du flux de courant du troisième tube électrique (T3) étant opposé à celui du deuxième tube électrique (T1).

FIG.1

FIG.2

FIG.3

90/101

16

FIG.4

FIG.18

FIG.5

FIG.6

FIG.7

90/ 101

17

FIG.8

FIG.9

FIG.10

FIG.11

FIG.12

FIG.13

90/101

18

FIG.14

FIG.15

FIG.16

a)

b)

c)

FIG.17